(19) Europäisches Patentamt / European Patent Office / Office européen des brevets

(11) **EP 2 962 492 B1**

(12) **EUROPEAN PATENT SPECIFICATION**

(45) Date of publication and mention
of the grant of the patent:
**09.06.2021 Bulletin 2021/23**

(21) Application number: **14757346.3**

(22) Date of filing: **26.02.2014**

(51) Int Cl.:
*H04W 36/14* (2009.01)   *H04W 36/34* (2009.01)

(86) International application number:
**PCT/KR2014/001556**

(87) International publication number:
**WO 2014/133313 (04.09.2014 Gazette 2014/36)**

(54) **METHOD AND SYSTEM FOR IMPROVING CIRCUIT SWITCHED FALL BACK (CSFB) PERFORMANCE**

VERFAHREN UND SYSTEM ZUR VERBESSERUNG EINER LEITUNGSVERMITTELTEN FALLBACK (CSFB)-LEISTUNG

PROCÉDÉ ET SYSTÈME D'AMÉLIORATION DE PERFORMANCE DE REPLI SUR COMMUTATION DE CIRCUITS (CSFB)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2013 IN 828CH2013**

(43) Date of publication of application:
**06.01.2016 Bulletin 2016/01**

(73) Proprietor: **Samsung Electronics Co., Ltd.
Suwon-si, Gyeonggi-do 443-742 (KR)**

(72) Inventors:
• **MANEPALLI, Venkateswara Rao
Byrasandra
Bangalore 560093 (IN)**

• **KARMAKAR, Subhasish
Byrasandra
Bangalore 560093 (IN)**

(74) Representative: **Nederlandsch Octrooibureau
P.O. Box 29720
2502 LS The Hague (NL)**

(56) References cited:
EP-A2- 2 343 918      WO-A1-2013/019288
JP-A- 2012 532 507    KR-A- 20120 020 148
KR-A- 20120 103 603   US-A1- 2010 284 333
US-A1- 2012 064 884   US-A1- 2012 140 644

**Description**

**Technical Field**

The present invention relates to field of wireless communication and more particularly relates to enhancement in Circuit Switched Fall Back (CSFB) procedure during Inter-Radio Access Technology (RAT) redirection.

**Background Art**

The 3rd Generation Partnership Project (3GPP) Long Term Evolution (LTE) is an evolving high speed, high capacity standard for user equipments (UE) emerging as a globally accepted standard. The LTE that is being deployed globally operates in Packet Switched (PS) domain. Currently, UEs equipped with LTE technology utilize LTE PS domain to handle data traffic while the voice traffic is handled by legacy CS networks (legacy Radio Access Technologies (RATs)) such as Global System for Mobile communications (GSM), Universal Mobile Terrestrial System (UMTS) and GSM EDGE Radio Access Network (GERAN).To support Circuit Switched (CS) domain communication such as voice calls the UE in LTE has to switch to CS supporting legacy RATs.

The Circuit Switched Fall Back (CSFB) procedure standardized by 3GPP technical specification enables the UE's to perform this switching during Mobile Originated (MO) or Mobile Terminated Call (MT). The 3GPP standard defines Inter-RAT (I-RAT) for mobility (switching) between LTE and earlier 3GPP technologies such as UMTS and GERAN. To acquire a legacy RAT during I-RAT switching the 3GPP standard provides redirection based CSFB procedure.

In accordance with existing 3GPP standard for redirection based CSFB procedure, when the CS call is attempted while UE is in LTE, the UE starts an Extended Service Request (ESR) procedure. When the extended service request is received by E-UTRAN Node B (eNB) of the LTE network, the eNB provides the UE with Radio Resource Control (RRC) connection release along with redirection request including the target RAT frequency on to which the UE can camp for CS call. However, at many instances redirection from LTE to other RATs like UMTS and GERAN fails due to redirected frequency being in poor signal conditions. The existing redirection based CSFB procedure fails to check for and utilize other available frequencies which are comparatively better and on which the UE can camp to setup new RRC connection for Mobile Originated (MO) call.

Moreover, in accordance with the existing redirection based CSFB procedure once the RRC connection is initiated, the UE camps to the serving frequency till the expiry of timer specified by T300*N300 even though it detects poor signal conditions. This timer in the existing CSFB procedure restricts the number of attempts to resend RRC connection request within the preset ESR timer. Thus, existing methods increase the CSFB call failure rate.

In light of above discussion, a method and system to provide improved CSFB procedure to effectively reduce the CSFB call failure rate is appreciated.

WO 2013/019288 relates to a method of wireless communication includes receiving an instruction from a serving radio access technology (RAT) to redirect to a target RAT. The instruction includes redirection information indicating a set of target RATs. Separate timer values may be received, from the serving RAT, for each of the target RATs, where the timer values indicate how long a UE should attempt to camp on each of the target RATs. A redirection priority level can also be received.

US 2012/064884 discloses Circuit-switched fallback (CSFB) which is a technique to deliver voice-services to a mobile, when the mobile is camped in a long-term evolution (LTE) network. This may be required when the LTE network does not support voice services natively. If a user makes a mobile originating (MO) call, or receives a mobile terminating (MT) call, the LIE may inform the LTE network that the UE is leaving for the call by initiating a call setup procedure. However, there may be instances where the call setup procedure may fail. If the call setup procedure was either not initiated, or was initiated but failed, the UE may determine to search for a suitable CS RAT/cell on its own without instructions/commands from the network. Therefore, this document discloses techniques for the UE to find CS services based on information collected at the UE.

**Disclosure of Invention**

**Solution to Problem**

The principal object of the embodiments herein is to provide a method and an apparatus that enable UE to collect neighbor frequency list from the network along with the redirection frequency sent by the LTE network.

Another object of the invention is to provide a method to enable the UE to select best frequency for camping among all available neighbor frequencies and the redirected frequency.

Another object of the invention is to provide a method to override timers in a RRC connection establishment process during CSFB call procedure to effectively utilize Extended Service Request (ESR) timer for initiating maximum possible RRC connection requests.

Accordingly the invention is defined by the appended claims.

**Brief Description of Drawings**

This invention is illustrated in the accompanying drawings, throughout which like reference letters indicate corresponding parts in the various figures. The embodiments herein will be better understood from the following description with reference to the drawings, in which:

FIG. 1 illustrates a block diagram of user equipment (UE) with various modules, according to embodiments as disclosed herein;

FIG. 2 illustrates an exemplary sequence diagram explaining redirection based CSFB call procedure in the existing 3GPP standard;

FIG. 3 illustrates a flow diagram explaining the process for selecting target RAT frequency to camp on during the CSFB call, according to embodiments as disclosed herein; and

FIG. 4 illustrates a flow diagram explaining the process of handling timers/parameters in RRC connection establishment procedure in the target RAT, according to embodiments as disclosed herein.

**Best Mode for Carrying out the Invention**

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

The embodiments herein achieve a method and an apparatus to improve The Circuit Switched Fall Back (CSFB) performance specified in the 3GPP standard. The method enables the User Entity (UE) to collect neighbor frequency list from the network along with the redirection frequency sent by the Long Term Evolution (LTE) network in response to ESR initiated by the UE. The method enables the UE to select best frequency on which the UE can camp for Circuit Switched (CS) call. The method enables the UE to apply additional offset criteria over the existing S-criteria during selection of frequency to camp on. The offset provided enables selecting best frequency from the available frequencies for the UE to establish RRC connection and effectively reduces CSFB call failure.

In an embodiment, the method enables the UE to override T300 and N300 timers in the Radio Resource Control (RRC) connection establishment process during CSFB call procedure and effectively utilize the Extended Service Request (ESR) timer. Thus, within the existing ESR timer the UE initiates maximum possible RRC connection requests providing the UE maximum attempts to establish successful RRC connection.

Thus, the present invention reduces the CSFB call failure rate and enhances user experience.

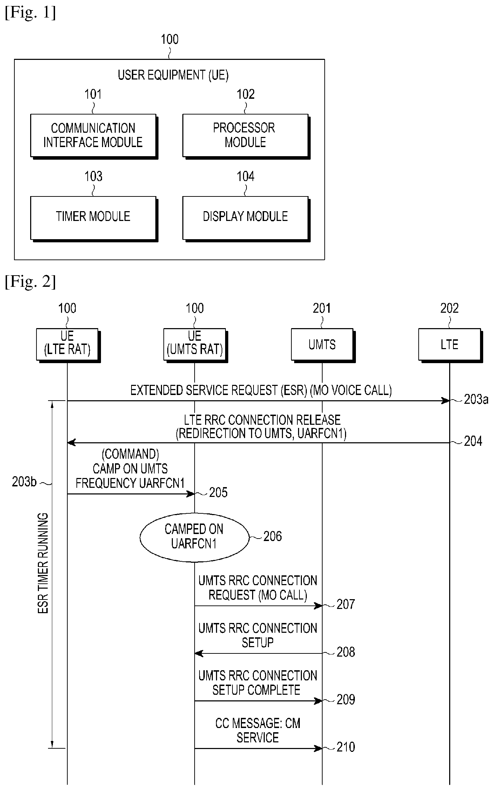

Referring now to the drawings, and more particularly to FIGS. 1 through 4, where similar reference characters denote corresponding features consistently throughout the figures, there are shown preferred embodiments.

FIG. 1 illustrates a block diagram of user equipment (UE) with various modules, according to embodiments as disclosed herein. As depicted in the figure, the user equipment 100 comprises a communication interface module 101, a processor module 102, a display module 103 and a timer module 104. The communication interface module 101 enables the UE 100 to connect to the network. The network comprises of various communication technologies including but not limited to LTE, Universal Mobile Terrestrial System (UMTS), Global System for Mobile communications (GSM), and GSM EDGE Radio Access Network (GERAN). The processor module 102 executes set of instructions that are stored in a memory. For example, the processor executes instructions for selecting the serving frequency on which the UE can camp on. The timer module 103 comprises various timers used by the UE 100. For example, the timer module comprises the timers T300 and N300 of the RRC connection establishment process. The display module 103 of the user equipment 100 comprises of user interface such as a display screen providing data display and data input functions (For example, a touch key pad). In an embodiment, the UE may also comprise of several other modules which fall within the scope of the invention known to a person with ordinary skill in the art.

FIG. 2 illustrates an exemplary sequence diagram explaining redirection based CSFB call procedure in the existing 3GPP standard. The figure depicts a UE 100, communicating with network UMTS 201 and LTE 202 during a CSFB call procedure in accordance with existing 3GPP standard. The UE 100 currently in LTE 202 operating in Packet Switched (PS) domain initiates CS call and requires to fall back to legacy RATs such as UMTS 201 and GERAN for CS services. The CS call can be Mobile Originated (MO) or Mobile Terminated (MT) call. The UE 100 requests (203a) the current LTE with an Extended Service Request (ESR) for the CS call (MO voice call). The UE 100 starts (203b) an Extended Service Request timer. In accordance with 3GPP standard the ESR timer is started and during the CSFB call procedure if the UE 100 is unable to establish the connection in UMTS/GSM RAT before ESR timer expires the CSFB call fails. Upon accepting the ESR the LTE 202 responds (204) with an RRC connection release comprising the target RAT and redirection frequency UARFCN1. The target RAT is the legacy RATs to which the UE 100 has to switch for the desired CS call. The figure depicts UMTS 201 as target RAT. The redirection frequency (UARFCN1) is the frequency of the target RAT (UMTS 201) on which UE 100 has to camp on (205).

In accordance with the existing CSFB call procedure the UE 100 receives maximum of one target RAT, one redirection frequency in the target RAT and some cells (cell identifiers) in the target RAT in the given redirected frequency.

Further, the UE 100 camps on (206) a cell with the redirected frequency (UARFCN1) in the UMTS 101. The cell on which the UE 100 camps on becomes the serving cell of the UE 100.

In UMTS standard procedure cell selection process allows the UE to select a suitable cell to camp on and access available services. UE camps on a Cell when suitable criteria are satisfied. The cell selection S-criteria for the UMTS network (UMTS Terrestrial Radio Access Network (UTRAN)) is fulfilled when:

```
For Frequency Division Duplex (FDD) cells:
  Srxle > 0 and Squal > 0
  For Time Division Duplex (TDD) cells:
  Srxlev > 0
```

Where:

$$Squal = Q_{almeas} - (Qqualmin + QualminOffset)$$

$$Srxlev = Q_{rxlevmeas} - (Qrxlevmin + QrxlevminOffset) - Pcompensation$$

The UE 100 then starts (207) the standard RRC connection establishment procedure with RRC connection request to the UMTS 201 (target RAT). If the RRC connection request is successful the UE 100 receives (208) UMTS RRC connection set up message. Then the UE 100 responds (209) with UMTS RRC connection set up complete message and establishes RRC connection with selected cell having the redirected frequency called serving cell with serving frequency as the redirected frequency.

In accordance with UMTS standards, in case the UE does not receive any response message for RRC connection request message then the UE retransmits the RRC connection request. Retransmission of RRC Connection Request is controlled by parameters like N300, variable V300 and timer T300. The UE starts the timer T300 as soon as RRC receives an indication from Medium Access Control (MAC) layer that Random Access Channel (RACH) for RRC connection request message is success or failure called RACH success and RACH failure respectively. On expiry of T300 timer, if V300 is equal to or smaller than N300 the UE100 submits new RRC connection request message to lower layers for transmission on the uplink CCCH. The N300 timer predefines maximum number of RRC connection requests allowed and V300 is a counter for current number of RRC requests initiated. For every increment in counter V300 the timer T300 restarts when the MAC layer indicates success or failure to transmit the message. If V300 exceeds N300 the UE 100 fails to successfully establish the RRC connection within the predefined time as set by the UMTS standard and enters idle mode.

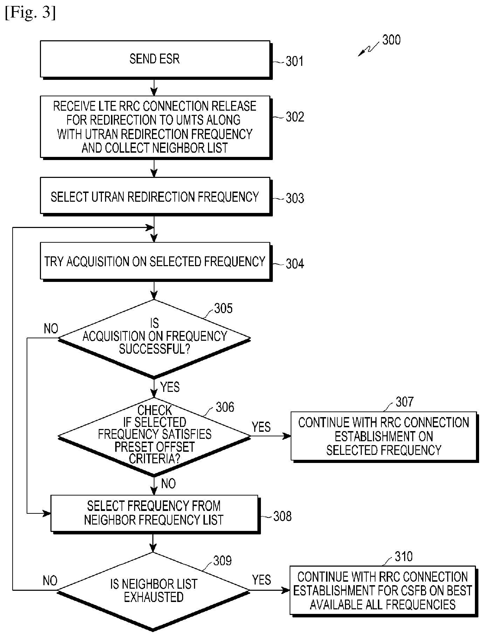

FIG. 3 illustrates a flow diagram explaining the process for selecting target RAT frequency to camp on during the CSFB call, according to a non-claimed aspect as disclosed herein. As depicted in the flow diagram 300, at step 301, the UE 100 in LTE 202 sends the ESR to initiate the CS call. The LTE 202 upon accepting the ESR responds with an RRC connection release. At step 302, the UE 100 receives the LTE RRC connection release that comprises target RAT (UMTS) and redirection frequency of the target RAT network.

In a non-claimed aspect, the target RAT is GSM, UMTS or GERAN and the like.

At step 302, the UE 100 also collects neighbor list from the network. The neighbor list comprises list of frequencies for the UE 100 to camp on and make connection to continue with the desired CS call.

In non-claimed aspect, the UE 100 collects the neighbor list from LTE SIB6, Idle Mode Mobility Control Information Element, GERAN system information, UMTS dedicated priority information and/or UMTS SIB11.

The method enables the UE 100 to select best suitable frequency among all the available frequencies that include but are not limited to the redirection frequency and the neighbor list frequencies. The selection is based on signal conditions of the cells on the chosen frequency. During selection of cells in the frequency to camp on in the target RAT, the method enables the UE 100 to balance between the acceptable signal conditions for the call to be successful and honoring the network chosen redirection frequency as network would have chosen the frequency based on load conditions.

At step 303, the UE 100 gives preference to the received redirection frequency from the LTE 202 and selects the UTRAN redirection frequency for the target UMTS. Further, at step 304, the UE 100 tries acquisition of cells on the selected frequency (currently the redirection frequency). Cell or cells providing communication on the selected frequency are checked if they provide acceptable signal conditions for CSFB call to go through. The UE 100 performs this check based on the existing S-criteria. At step 305, the UE 100 checks if the acquisition on the selected frequency is successful. If the UE is successful in acquiring the selected frequency on satisfying the S-criteria, at step 306, the UE performs an additional check using the offset criteria. The offset criteria are in addition over the existing S-criteria. Thus, the method enables UE 100 to apply plurality of checks before camping on the selected frequency.

In non-claimed aspect, the additional offset criteria comprises performing offset (threshold) for Srxlev, and/or Squal parameters. CSFB_Offset_qual, CSFB_Offset_rxlev are the terms used for representing offset criteria (threshold). Though the offsets specified here are related to CSFB, similar offsets can be used by UE and/or given by the network for different scenarios like voice call, data call, and so on. Also this is not limited to UMTS RAT and can be given in any RAT.

An example of using this offset can be as follows.

While ESR timer is running, consider the redirected UTRAN frequency for CSFB call, if best cell in that frequency satisfies below criteria;

Srxlev > CSFB_Offset_rxlev; where CSFB_Offset_rxlev is a positive value, and/or

Squal > CSFB_Offset_qual; where CSFB_Offset_qual is a positive value

If, offset criteria(s) are not met, search for best cell in neighbor frequencies available from LTE SIB6, Idle Mode Mobility Control Information element, GERAN system information, UMTS dedicated priority information and/or UMTS SIB11.

If none of the cells in the frequencies satisfy offset(s), select the best cell among the available frequencies without applying the offset criteria.

In a non-claimed aspect, method enables UE to apply the additional offset over the existing S-criteria (used in UMTS cell selection for camping) when the redirection is for important procedures like CSFB. In an embodiment, the offset can be internal to the UE 100 and/or given by the network.

If the selected frequency satisfies the offset criteria at step 306, then at step 307, the UE 100 continues with RRC connection establishment on selected frequency.

If at step 305, the UE is unable to acquire the selected frequency as a result of failure of S-criteria or if at step 306 the selected frequency fails the offset criteria, then at step 308, the UE 100 selects a frequency from the neighbor list. Further at step 309, the UE repeats steps from step 304 with the new selected frequency from the neighbor list. The UE 100 to checks for all available frequencies in the neighbor list. If at step 309, the neighbor list is exhausted with none of the neighbor frequency having signal conditions to satisfy the frequency selection criteria, then at step 310, the UE 100 still continues with RRC connection establishment for CSFB by selecting best available frequency among all frequencies comprising the redirection frequency and frequencies from neighbor list.

In a non-claimed aspect, the best frequency is the frequency having a cell that least deviates from the selection criteria.

Thus, the method enables the UE 100 to choose among the neighbor frequencies and the network redirected frequency rather than rely only on the redirection frequency. Further, the UE is able to select the best among the available frequencies which improves CSFB call success rate and enhances user experience. The various actions in flow diagram 300 may be performed in the order presented, in a different order or simultaneously. Further, in some embodiments, some actions listed in FIG. 3 may be omitted.

In a non-claimed aspect, the redirection request in LTE RRC Connection Release response carries more than one frequency of same target RAT.

In another non-claimed aspect, the LTE RRC Connection Release response carries more than one RAT in redirection request.

The above non-claimed aspects, enable enhancing the CSFB performance in weak signal conditions as UE may choose best out of the given RATs and/or the frequencies of the same RAT.

In an embodiment, along with target RAT(s) and/or frequencies as part of RRC connection release procedure, the network provides prioritized list for the target RATs and for the plurality of redirection frequencies sent to the UE 100. Using these priorities UE can select the best available frequency at that instant of time.

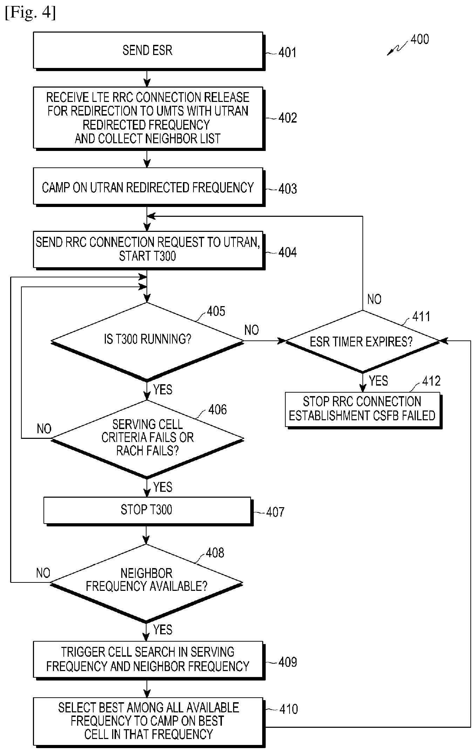

FIG. 4 illustrates a flow diagram explaining the process of handling timers/parameters in RRC connection establishment procedure in the target RAT, according to embodiments as disclosed herein. As depicted in the flow diagram 400, the method enables the UE 100 to override the timer T300 and parameter N300 in the existing RRC connection establishment process if the RRC connection establishment is for important procedures such as CSFB call and so on. The active ESR timer indicates the UE 100 about any ongoing CSFB procedure. The method enables the UE to select a neighbor frequency during RRC connection establishment for CSFB if RRC connection establishment fails on the redirection frequency.

At step 401, the UE 100 in LTE 202 sends the ESR to initiate the CS call. The LTE 202 upon accepting the ESR responds with an RRC connection release. At step 402, the UE 100 receives the RRC connection release that comprises target RAT (UMTS) and redirection frequency of the target RAT network called UTRAN redirection frequency.

In an embodiment, the target RAT is GSM, UMTS or GERAN and the like.

At step 402, the UE 100 also collects neighbor list from the network. The neighbor list comprises list of frequencies for the UE 100 to camp on and establish connection to continue with the desired CS call.

In an embodiment, the UE 100 collects the neighbor list from LTE SIB6, Idle Mode Mobility Control Information element, GERAN system information, UMTS dedicated priority information and/or UMTS SIB11.

At step 403, the UE 100 camps on the UTRAN redirected frequency. At step 404, the UE sends RRC connection request to the UTRAN and starts (activates) the timer T300. At step 405, the UE checks if the timer T300 is active (running). If the timer T300 is running, then at step 406 the UE 100 checks if serving cell satisfies the S-criteria or Random Access Channel (RACH) failure occurs. The serving cell is the cell on to which the UE is currently camped on and the frequency of the serving cell is the current serving frequency of the UE 100. If the S-criteria failure or the RACH failure is detected by the UE 100, then at step 407, the UE 100 overrides (stops or deactivates) the timer T300.

In the existing standard of UMTS timer T300 continues in spite the UE 100 detects RACH failure and only completion of the predefined time set by timerT300 new RRC connection request is initiated. In the existing standard the number of RRC connection request attempts for establishing RRC connection is limited by preset timer N300.

The method disclosed enables the UE 100 to override (neglect) N300 so as to allow the UE to try maximum attempts before the ESR timer expires during important procedures such as CSFB call and so on. By allowing the UE 100 to override (stop) T300 prematurely on detection of S-criteria failure or RACH failure, the UE 100 can quickly initiate repeat RRC connection request. This provides the UE 100 more attempts for RRC connection request within the ESR timer limit and increases the success rate of RRC connection establishment.

After overriding (deactivating) timer T300, then at step 408, the UE 100 checks if neighbor list frequencies are available. If neighbor list is available, then at step 409, the UE 100 triggers cell search in neighbor frequency and serving frequency. At step 410, the UE 100 selects best among all available frequencies. At step 411, the UE 100 checks if the ESR timer is still active (running). If the ESR timer has not expired the UE 100 utilizes ESR timer left over time to try RRC connection request attempt for the frequency selected at step 410. Then the flow loops back to step 404 for the RRC connection establishment with cell having the selected frequency. This process is repeated till all neighbor frequencies in the neighbor list are tried. If at step 408, no neighbor frequency is available the flow loops back to step 405 to re-attempt RRC connection request for the UTRAN redirected frequency if the ESR timer is active. The various actions in flow diagram 400 may be performed in the order presented, in a different order or simultaneously. Further, in some embodiments, some actions listed in FIG. 4 may be omitted.

The embodiments disclosed herein can be implemented through at least one software program running on at least one hardware device and performing network management functions to control the elements. The elements shown in Fig. 1 include blocks which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the present invention as defined by the appended claims.

**Claims**

1. A method for a circuit switched fall back, CSFB, procedure in a user equipment, UE, during inter-radio access technologies, RATs, redirection, the method comprising:

sending (401) an extended service request to initiate a circuit-switched, CS, call;
receiving (402) a radio resource control, RRC, connection release message comprising a target RAT redirection frequency and collecting, from the network, a neighbor list comprising a list of frequencies for the UE to camp on and establish connection to continue with a desired CS call;

the UE camping (403) on a universal terrestrial radio access network, UTRAN, redirected frequency and sending (404) an RRC connection request message to a UTRAN and starting a T300 timer for an RRC connection establishment process;

overriding (407) the T300 timer, if a serving cell fails (406) in at least one of a serving cell S-criteria or a random access channel, RACH; and

detecting (409) a cell in at least one of a serving frequency or at least one neighbor frequency, and attempting an RRC connection establishment with the cell on the best frequency of all available frequencies before an extended service request, ESR, timer expires.

2. The method of claim 1, further comprising overriding the T300 timer to re-attempt multiple RRC connection requests before the ESR timer expires.

3. The method of claim 1, further comprising collecting at least one neighbor frequency from a neighbor list, wherein the neighbor list comprises at least one of long term evolution, LTE, system information block6, SIB6, an idle mode mobility control information element, a universal mobile terrestrial system, UMTS, SIB11, UMTS dedicated priority information, or global system for mobile communications, GSM, enhanced data for global evolution, EDGE, radio access network, GERAN, system information.

4. The method of claim 1, further comprising selecting the serving frequency to camp on before requesting for the RRC connection establishment from the at least one of a neighbor frequency or a redirection frequency.

5. The method of claim 1, further comprising receiving multiple redirection frequencies from a long term evolution, LTE network during the RRC connection release process.

6. The method of claim 1, further comprising selecting at least one RAT among multiple RATs information transmitted by a long term evolution, LTE, network based on the signal condition.

7. A user equipment, UE, for a circuit switched fall back, CSFB, procedure during inter-radio access technologies, RATs, redirection, the UE comprising:

an integrated circuit comprising at least one processor;
at least one memory having a computer program code within the circuit;
the at least one memory and the computer program code with the at least one processor cause the UE to:

send (401) an extended service request to initiate a circuit-switched, CS, call;
receive (402) an RRC connection release message comprising a target RAT redirection frequency and collect, from the network, a neighbor list comprising a list of frequencies for the UE to camp on and establish connection to continue with a desired CS call;
camp the UE on a universal terrestrial radio access network, UTRAN, redirected frequency and send (404) an RRC connection request message to a UTRAN, and start a T300 timer for an RRC connection establishment process;
override (407) the T300 timer, if a serving cell in the redirected frequency fails (406) in at least one of a serving cell S-criteria or a random access channel, RACH;
detect (409) a cell in at least one of a serving frequency or at least one neighbor frequency, and attempt an RRC connection establishment with the cell on the best frequency of all available frequencies before extended service request, ESR, timer expires.

8. The UE of claim 7, wherein the UE is further configured to override the T300 timer to re-attempt multiple RRC connection requests before the ESR timer expires.

9. The UE of claim 7, wherein the UE is configured to collect at least one neighbor frequency from a neighbor list, and wherein the neighbor list comprises at least one of long term evolution, LTE, a system information block6, SIB6, an idle mode mobility control information element, a universal mobile terrestrial system, UMTS, SIB11, UMTS dedicated priority information, or global system for mobile communications, GSM, enhanced data for global evolution, EDGE, radio access network, GERAN, system information.

10. The UE of claim 7, wherein the UE is configured to select the serving frequency to camp on before requesting for the RRC connection establishment from the at least one of a neighbor frequency or a redirection frequency.

**11.** The UE of claim 7, wherein the UE is configured to select at least one RAT among multiple RATs information transmitted by a long term evolution, LTE network based on the signal condition.

**12.** The UE of claim 7, wherein the UE is configured to receive multiple redirection frequencies from a long term evolution, LTE network during the RRC connection release process.

**13.** The method of claim 1 or the UE of claim 7, wherein the serving cell criteria comprises an offset criteria in addition to the S-criteria, and wherein the offset criteria are applied on at least one of Srxlev, Squal parameters for a voice call, or a data call.

**14.** The method of claim 1, wherein overriding (407) the timer comprises:

checking if the timer is active and a serving cell fails (406) in at least one of a serving cell criteria or a RACH; and overriding the timer if the timer is active and the serving cell fails (406) in at least one of a serving cell criteria or a RACH.

**15.** The method of claim 1, wherein the timer sets a time interval between RRC connection requests when a plurality of RRC connection requests are attempted.

**Patentansprüche**

**1.** Verfahren für ein leitungsvermitteltes Fallback(CSFB)-Verfahren in einem Benutzergerät, UE, während einer Interfunkzugangstechnologien(RAT)-Umleitung, wobei das Verfahren Folgendes umfasst:

Senden (401) einer erweiterten Dienstanforderung, um einen leitungsvermittelten, CS, Anruf einzuleiten; Empfangen (402) einer Radio Resource Control(RRC)-Verbindungsfreigabemeldung, die eine Ziel-RAT-Umleitungsfrequenz umfasst, und Sammeln einer Nachbarliste aus dem Netzwerk, die eine Liste von Frequenzen umfasst, auf die sich das UE festlegen und eine Verbindung herstellen kann, um mit einem gewünschten CS-Anruf fortzufahren; das UE, das sich auf einer umgeleiteten universellen terrestrischen Funkzugangsnetz(UTRAN)-Frequenz befindet (403) und eine RRC-Verbindungsanfragemeldung an ein UTRAN sendet (404) und einen T300-Zeitgeber für ein RRC-Verbindungsaufbauverfahren startet; Überschreiben (407) des T300-Zeitgebers, wenn eine Bedienzelle in einem S-Kriterium einer Bedienzelle und/oder einem Direktzugriffskanal, RACH, ausfällt (406); und Erkennen (409) einer Zelle in einer Bedienfrequenz und/oder mindestens einer Nachbarfrequenz und Versuchen eines RRC-Verbindungsaufbaus mit der Zelle auf der besten Frequenz aller verfügbaren Frequenzen, bevor ein erweiterter Dienstanforderungs(ESR)-Zeitgeber abläuft.

**2.** Verfahren nach Anspruch 1, welches ferner das Überschreiben des T300-Zeitgebers umfasst, um erneut mehrere RRC-Verbindungsanfragen zu versuchen, bevor der ESR-Zeitgeber abläuft.

**3.** Verfahren nach Anspruch 1, welches ferner das Sammeln mindestens einer Nachbarfrequenz aus einer Nachbarliste umfasst, wobei die Nachbarliste einen Long Term Evolution(LTE)-Systeminformationsblock6(SIB6), ein Leerlaufmodus-Mobilitätssteuerungs-Informationselement, einen universelles mobiles terrestrisches System(UMTS)-SIB11, UMTS-spezifische Prioritätsinformationen und/oder ein globales System für verbesserte mobile Kommunikations(GSM)-Daten für globale Entwicklungs(EDGE)-Funkzugangsnetz(GERAN)-Systeminformationen umfasst.

**4.** Verfahren nach Anspruch 1, welches ferner das Auswählen der Bedienfrequenz zum Festlegen vor dem Anfordern des RRC-Verbindungsaufbaus von der Nachbarfrequenz und/oder der Umleitungsfrequenz umfasst.

**5.** Verfahren nach Anspruch 1, welches ferner das Empfangen mehrerer Umleitungsfrequenzen von einem Long Term Evolution(LTE)-Netzwerk während des RRC-Verbindungsfreigabeverfahrens umfasst.

**6.** Verfahren nach Anspruch 1, welches ferner das Auswählen mindestens einer RAT unter mehreren RAT-Informationen umfasst, die von einem Long Term Evolution(LTE)-Netzwerk übertragen werden, basierend auf der Signalbedingung.

**7.** Benutzergerät, UE, für ein leitungsvermitteltes Fallback(CSFB)-Verfahren während einer Interfunkzugangstechnologien(RAT)-Umleitung, wobei das UE Folgendes umfasst:

einen integrierten Schaltkreis mit mindestens einem Prozessor;
mindestens einen Speicher mit einem Computerprogrammcode innerhalb des Schaltkreises;
wobei der mindestens eine Speicher und der Computerprogrammcode mit dem mindestens einen Prozessor das UE veranlassen zum:

Senden (401) einer erweiterten Dienstanforderung zum Einleiten eines leitungsvermittelten, CS, Anrufs;
Empfangen (402) einer RRC-Verbindungsfreigabemeldung, die eine Ziel-RAT-Umleitungsfrequenz umfasst, und Sammeln einer Nachbarliste aus dem Netzwerk, die eine Liste von Frequenzen umfasst, auf die sich das UE festlegen und eine Verbindung herstellen kann, um mit einem gewünschten CS-Anruf fortzufahren;
Festlegen des UE auf einer umgeleiteten universellen terrestrischen Funkzugangsnetz(UTRAN)-Frequenz und Senden (404) einer RRC-Verbindungsanfragemeldung an ein UTRAN und Starten eines T300-Zeitgebers für ein RRC-Verbindungsaufbauverfahren;
Überschreiben (407) des T300-Zeitgebers, wenn eine Bedienzelle in der umgeleiteten Frequenz in einem S-Kriterium der Bedienzelle und/oder einem Direktzugriffskanal, RACH, ausfällt (406);
Erkennen (409) einer Zelle in einer Bedienfrequenz und/oder mindestens einer Nachbarfrequenz und Versuchen eines RRC-Verbindungsaufbaus mit der Zelle auf der besten Frequenz aller verfügbaren Frequenzen, bevor der erweiterte Dienstanforderungs(ESR)-Zeitgeber abläuft.

**8.** UE nach Anspruch 7, wobei das UE ferner konfiguriert ist, um den T300-Zeitgeber zu überschreiben, um erneut mehrere RRC-Verbindungsanfragen zu versuchen, bevor der ESR-Zeitgeber abläuft.

**9.** UE nach Anspruch 7, wobei das UE konfiguriert ist, um mindestens eine Nachbarfrequenz aus einer Nachbarliste zu sammeln, und wobei die Nachbarliste einen Long Term Evolution(LTE)-Systeminformationsblock6(SIB6), ein Leerlaufmodus-Mobilitätssteuerungs-Informationselement, einen universelles mobiles terrestrisches System(UMTS)-SIB11, UMTS-spezifische Prioritätsinformationen und/oder ein globales System für verbesserte mobile Kommunikations(GSM)-Daten für globale Entwicklungs(EDGE)-Funkzugangsnetz(GERAN)-Systeminformationen umfasst.

**10.** UE nach Anspruch 7, wobei das UE konfiguriert ist, um die Bedienfrequenz zum Festzulegen, auszuwählen, bevor der RRC-Verbindungsaufbau von der Nachbarfrequenz und/oder der Umleitungsfrequenz angefordert wird.

**11.** UE nach Anspruch 7, wobei das UE konfiguriert ist, um mindestens eine RAT unter mehreren RAT-Informationen auszuwählen, die durch ein Long Term Evolution(LTE)-Netzwerk übertragen werden, basierend auf der Signalbedingung.

**12.** UE nach Anspruch 7, wobei das UE konfiguriert ist, um mehrere Umleitungsfrequenzen von einem Long Term Evolution(LTE)-Netzwerk während des RRC-Verbindungsfreigabeverfahrens zu empfangen.

**13.** Verfahren nach Anspruch 1 oder UE nach Anspruch 7, wobei die Bedienzellenkriterien zusätzlich zu den S-Kriterien Versatzkriterien umfassen, und wobei die Versatzkriterien auf Srxlev-, Squal-Parameter für einen Sprachanruf und/oder einen Datenanruf angewendet werden.

**14.** Verfahren nach Anspruch 1, wobei das Überschreiben (407) des Zeitgebers Folgendes umfasst:

Überprüfen, ob der Zeitgeber aktiv ist und eine Bedienzelle in einem Bedienzellenkriterium oder einem RACH ausfällt (406); und
Überschreiben des Zeitgebers, wenn der Zeitgeber aktiv ist und die Bedienzelle in einem Bedienzellenkriterium und/oder einem RACH ausfällt (406).

**15.** Verfahren nach Anspruch 1, wobei der Zeitgeber ein Zeitintervall zwischen RRC-Verbindungsanfragen einstellt, wenn mehrere RRC-Verbindungsanfragen versucht werden.

**Revendications**

1. Procédé pour une procédure de repli sur commutation de circuits, CSFB, dans un équipement d'utilisateur, UE, lors d'une redirection de technologies d'accès inter-radio, RAT, le procédé comprenant :

   envoyer (401) une demande de service étendu pour initier un appel à commutation de circuits, CS ;
   recevoir (402) un message de libération de connexion de contrôle de ressources radio, RRC, comprenant une fréquence de redirection de RAT cible et collecter, à partir du réseau, une liste de fréquences voisines comprenant une liste de fréquences sur lesquelles l'UE es calé et établir une connexion pour continuer avec un appel à CS souhaité ;
   l'UE est calé (403) sur une fréquence redirigée de réseau d'accès radio terrestre universel, UTRAN, et envoie (404) un message de demande de connexion de RRC à un UTRAN et démarre un temporisateur T300 pour un processus d'établissement de connexion de RRC ;
   annuler (407) le temporisateur T300, si une cellule de desserte échoue (406) dans au moins l'un des critères S de cellule de desserte ou un canal d'accès aléatoire, RACH ; et
   détecter (409) une cellule dans au moins l'une parmi une fréquence de desserte ou au moins une fréquence voisine, et tenter d'établir une connexion de RRC avec la cellule sur la meilleure fréquence de toutes les fréquences disponibles avant l'expiration d'un temporisateur de demande de service étendu, ESR.

2. Procédé selon la revendication 1, comprenant en outre l'annulation du temporisateur T300 pour réessayer de multiples demandes de connexion de RRC avant l'expiration du temporisateur d'ESR.

3. Procédé selon la revendication 1, comprenant en outre la collecte d'au moins une fréquence voisine à partir d'une liste de fréquences voisines, où la liste de fréquences voisines comprend au moins l'un parmi un bloc6 d'informations de système, SIB6, d'évolution à long terme, LTE, un élément d'informations de contrôle de mobilité en mode de repos, un SIB11 de système terrestre mobile universel, UMTS, des informations de priorité dédiées d'UMTS, ou des informations de système de réseau d'accès radio de données améliorées pour l'évolution globale, EDGE, / système mondial de communications mobiles, GSM, GERAN.

4. Procédé selon la revendication 1, comprenant en outre la sélection de la fréquence de desserte sur laquelle se caler avant de demander l'établissement de connexion de RRC à partir de l'au moins une parmi une fréquence voisine ou une fréquence de redirection.

5. Procédé selon la revendication 1, comprenant en outre la réception de multiples fréquences de redirection à partir d'un réseau d'évolution à long terme, LTE, lors du processus de libération de connexion de RRC.

6. Procédé selon la revendication 1, comprenant en outre la sélection d'au moins une RAT parmi de multiples informations de RAT transmises par un réseau d'évolution à long terme, LTE, sur la base de la condition de signal.

7. Équipement d'utilisateur, UE, pour une procédure de repli sur commutation de circuits, CSFB, lors d'une redirection de technologies d'accès inter-radio, RAT, l'UE comprenant :

   un circuit intégré comprenant au moins un processeur ;
   au moins une mémoire ayant un code de programme informatique dans le circuit ;
   l'au moins une mémoire et le code de programme informatique avec l'au moins un processeur amènent l'UE à :

   envoyer (401) une demande de service étendu pour initier un appel à commutation de circuits, CS ;
   recevoir (402) un message de libération de connexion de RRC comprenant une fréquence de redirection de RAT cible et collecter, à partir du réseau, une liste de fréquences voisines comprenant une liste de fréquences sur lesquelles l'UE est calé et établir une connexion pour continuer avec un appel à CS souhaité ;
   caler l'UE sur une fréquence redirigée de réseau d'accès radio terrestre universel, UTRAN, et envoyer (404) un message de demande de connexion de RRC à un UTRAN, et démarrer un temporisateur T300 pour un processus d'établissement de connexion de RRC ;
   annuler (407) le temporisateur T300, si une cellule de desserte dans la fréquence redirigée échoue (406) dans au moins l'un des critères S de cellule de desserte ou un canal d'accès aléatoire, RACH ;
   détecter (409) une cellule dans au moins l'une parmi une fréquence de desserte ou au moins une fréquence voisine, et tenter un établissement de connexion de RRC avec la cellule sur la meilleure fréquence de toutes les fréquences disponibles avant l'expiration du temporisateur de demande de service étendu, ESR.

**8.** UE selon la revendication 7, où l'UE est configuré en outre pour annuler le temporisateur T300 pour réessayer de multiples demandes de connexion de RRC avant l'expiration du temporisateur d'ESR.

**9.** UE selon la revendication 7, où l'UE est configuré pour collecter au moins une fréquence voisine à partir d'une liste de fréquences voisines, et où la liste de fréquences voisines comprend au moins l'un parmi un bloc6 d'informations de système, SIB6, d'évolution à long terme, LTE, un élément d'informations de contrôle de mobilité en mode de repos, un SIB11 de système terrestre mobile universel, UMTS, des informations de priorité dédiées d'UMTS, ou des informations de système de réseau d'accès radio de données améliorées pour l'évolution globale, EDGE, / système mondial de communications mobiles, GSM, GERAN.

**10.** UE selon la revendication 7, où l'UE est configuré pour sélectionner la fréquence de desserte sur laquelle se caler avant de demander l'établissement de connexion de RRC à partir de l'au moins l'une parmi une fréquence voisine ou une fréquence de redirection.

**11.** UE selon la revendication 7, où l'UE est configuré pour sélectionner au moins une RAT parmi de multiples informations de RAT transmises par un réseau d'évolution à long terme, LTE, sur la base de la condition de signal.

**12.** UE selon la revendication 7, où l'UE est configuré pour recevoir de multiples fréquences de redirection à partir d'un réseau d'évolution à long terme, LTE, lors du processus de libération de connexion de RRC.

**13.** Procédé selon la revendication 1 ou UE selon la revendication 7, où les critères de cellule de desserte comprennent des critères de décalage en plus des critères S, et où les critères de décalage sont appliqués à au moins l'un parmi des paramètres Srxlev, Squal pour un appel vocal ou un appel de données.

**14.** Procédé selon la revendication 1, où l'annulation (407) du temporisateur comprend :

vérifier si le temporisateur est actif et qu'une cellule de desserte échoue (406) dans au moins l'un parmi des critères de cellule de desserte ou un RACH ; et
annuler le temporisateur si le temporisateur est actif et que la cellule de desserte échoue (406) dans au moins l'un parmi des critères de cellule de desserte ou un RACH.

**15.** Procédé selon la revendication 1, où le temporisateur règle un intervalle de temps entre des demandes de connexion de RRC lorsqu'une pluralité de demandes de connexion de RRC est tentée.

[Fig. 1]

100

USER EQUIPMENT (UE)

101

COMMUNICATION
INTERFACE MODULE

102

PROCESSOR
MODULE

103

TIMER MODULE

104

DISPLAY MODULE

[Fig. 2]

| 100 | 100 | 201 | 202 |
|---|---|---|---|
| UE (LTE RAT) | UE (UMTS RAT) | UMTS | LTE |

EXTENDED SERVICE REQUEST (ESR) (MO VOICE CALL) — 203a

LTE RRC CONNECTION RELEASE
(REDIRECTION TO UMTS, UARFCN1) — 204

203b — (COMMAND)
CAMP ON UMTS
FREQUENCY UARFCN1 — 205

CAMPED ON
UARFCN1 — 206

ESR TIMER RUNNING

UMTS RRC CONNECTION
REQUEST (MO CALL) — 207

UMTS RRC CONNECTION
SETUP — 208

UMTS RRC CONNECTION
SETUP COMPLETE — 209

CC MESSAGE: CM
SERVICE — 210

[Fig. 3]

```
                                                                    ⟋ 300
┌─────────────────────────────────────┐
│              SEND ESR               │─ 301
└─────────────────────────────────────┘
                  │
                  ▼
┌─────────────────────────────────────┐
│  RECEIVE LTE RRC CONNECTION RELEASE │
│     FOR REDIRECTION TO UMTS ALONG   │─ 302
│    WITH UTRAN REDIRECTION FREQUENCY │
│       AND COLLECT NEIGHBOR LIST     │
└─────────────────────────────────────┘
                  │
                  ▼
┌─────────────────────────────────────┐
│  SELECT UTRAN REDIRECTION FREQUENCY │─ 303
└─────────────────────────────────────┘
                  │
                  ▼
┌─────────────────────────────────────┐
│  TRY ACQUISITION ON SELECTED FREQUENCY │─ 304
└─────────────────────────────────────┘
                  │
                  ▼
            ╱─────305──╲
     NO    ╱    IS       ╲
  ◄────────  ACQUISITION ON FREQUENCY
            ╲  SUCCESSFUL?  ╱
             ╲────────────╱
                  │ YES
                  ▼
            ╱─────306────╲
            ╱  CHECK       ╲  YES    ┌──────────────────────────┐  307
           ╱  IF SELECTED   ╲───────►│ CONTINUE WITH RRC CONNECTION │
          ◄  FREQUENCY SATISFIES     │    ESTABLISHMENT ON          │
           ╲  PRESET OFFSET ╱        │     SELECTED FREQUENCY       │
            ╲  CRITERIA?   ╱         └──────────────────────────┘
             ╲──────────╱
                  │ NO
                  ▼
┌─────────────────────────────────────┐
│     SELECT FREQUENCY FROM           │─ 308
│     NEIGHBOR FREQUENCY LIST         │
└─────────────────────────────────────┘
                  │
                  ▼
            ╱─────309────╲
     NO    ╱              ╲  YES    ┌──────────────────────────────┐  310
  ◄────────  IS NEIGHBOR LIST        │  CONTINUE WITH RRC CONNECTION │
            ╲  EXHAUSTED   ╱────────►│ ESTABLISHMENT FOR CSFB ON BEST│
             ╲──────────╱            │   AVAILABLE ALL FREQUENCIES   │
                                     └──────────────────────────────┘
```

[Fig. 4]

400

SEND ESR — 401

RECEIVE LTE RRC CONNECTION RELEASE FOR REDIRECTION TO UMTS WITH UTRAN REDIRECTED FREQUENCY AND COLLECT NEIGHBOR LIST — 402

CAMP ON UTRAN REDIRECTED FREQUENCY — 403

SEND RRC CONNECTION REQUEST TO UTRAN, START T300 — 404

IS T300 RUNNING? — 405
NO → ESR TIMER EXPIRES? — 411
YES ↓

SERVING CELL CRITERIA FAILS OR RACH FAILS? — 406
NO
YES ↓

ESR TIMER EXPIRES? — 411
NO
YES → STOP RRC CONNECTION ESTABLISHMENT CSFB FAILED — 412

STOP T300 — 407

NEIGHBOR FREQUENCY AVAILABLE? — 408
NO
YES ↓

TRIGGER CELL SEARCH IN SERVING FREQUENCY AND NEIGHBOR FREQUENCY — 409

SELECT BEST AMONG ALL AVAILABLE FREQUENCY TO CAMP ON BEST CELL IN THAT FREQUENCY — 410

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013019288 A
- US 2012064884 A